# EUROPÄISCHE PATENTSCHRIFT

(11) **EP 2 616 765 B1**
(45) Veröffentlichungstag und Bekanntmachung des Hinweises auf die Patenterteilung: **11.11.2020**
(21) Anmeldenummer: 11787587.2
(22) Anmeldetag: 07.09.2011
(51) Int. Cl.: G01B 11/25

(54) **OPTISCHES MESSSYSTEM ZUM BESTIMMEN VON ABSTÄNDEN**
OPTICAL MEASUREMENT SYSTEM FOR DETERMINING DISTANCES
SYSTÈME DE MESURE OPTIQUE POUR MESURER DES DISTANCES

(30) Priorität: 13.09.2010 DE 102010045097
(43) Veröffentlichungstag der Anmeldung: 24.07.2013
(73) Patentinhaber: Micro-Epsilon Optronic GmbH, 01465 Dresden-Langebrück (DE)
(72) Erfinder: STAUTMEISTER, Torsten, 01465 Dresden-Langebrück (DE)
(74) Vertreter: Patent- und Rechtsanwälte Ullrich & Naumann
(86) Internationale Anmeldenummer: PCT/DE2011/001692
(87) Internationale Veröffentlichungsnummer: WO 2012/075978

(56) Entgegenhaltungen:
- EP-A1- 2 189 752
- WO-A1-02/066924
- DE-A1- 10 153 760
- DE-A1- 10 336 666
- DE-A1-102004 025 490
- DE-A1-102007 003 024
- DE-A1-102007 029 440
- US-A1- 2002 040 971
- US-A1- 2002 055 082
- US-A1- 2003 069 350
- BACHMANN, CHRISTIAN G.: "Laser Radar Systems and Techniques", DEDHAM, MASSACHUSETTS: ARTECH HOUSE INC., 1 January 1979 (1979-01-01), pages 9-10,

## Beschreibung

Die Erfindung betrifft ein Messsystem zum Bestimmen eines Abstandes zwischen einer Sensoreinrichtung und einem Messobjekt, wobei die Sensoreinrichtung eine Lichtquelle zum Erzeugen eines Beleuchtungslichtstrahls und einen Detektor zum Detektieren eines an einer Oberfläche des Messobjekts reflektierten Anteils des Beleuchtungslichtstrahls umfasst und wobei das Messobjekt zumindest für einen Wellenlängenbereich des sichtbaren Lichts transparent ausgebildet ist.

Die Erfindung betrifft ferner ein Messsystem zum Bestimmen eines Abstandes zwischen einer Sensoreinrichtung und einem Messobjekt, wobei die Sensoreinrichtung eine Lichtquelle zum Erzeugen eines Beleuchtungslichtstrahls und einen Detektor zum Detektieren eines an einer Oberfläche des Messobjekts reflektierten Anteils des Beleuchtungslichtstrahls umfasst und wobei das Messobjekt derart ausgebildet ist, dass sichtbares Licht direkt reflektiert wird.

Optische Messsysteme finden in der Praxis weitreichende Verwendung. Die berührungslose, präzise und dennoch schnelle Messung eröffnet eine Vielzahl von Anwendungsgebieten, in denen der Abstand zwischen einem Messobjekt und einer Sensoreinrichtung berührungslos gemessen oder ein Messobjekt verschleißfrei vermessen werden soll. Ein wichtiges Anwendungsgebiet ist die Qualitätssicherung, bei der die Beschaffenheit eines Werkstücks überprüft wird.

Bei optischen Messsystemen wird ein Messobjekt mit einem Beleuchtungslichtstrahl - sehr häufig einem roten oder infraroten Laserstrahl - beleuchtet und der an dem Messobjekt reflektierte Anteil des Beleuchtungslichtstrahls mit einem Detektor detektiert. Es sind aus der Praxis verschiedene Verfahren bekannt, nach denen mit einer derartigen Sensoreinrichtung der Abstand des Messobjekts von der Sensoreinrichtung bestimmt werden kann. Beispielhaft sei auf eine Triangulationsmessung verwiesen.

Problematisch sind die aus dem Stand der Technik bekannten Messsysteme immer dann, wenn an transparenten oder teil-transparenten Messobjekten gemessen werden soll. Transparent bedeutet in diesem Zusammenhang, dass weite spektrale Anteile des sichtbaren Lichts (Wellenlängenbereich zwischen etwa 400 nm und 800 nm) das Messobjekt passieren können. Während des Passierens werden die spektralen Anteile nur in geringem Maße gedämpft. Teiltransparent bedeutet, dass zumindest ein spektraler Anteil des sichtbaren Lichts das Messobjekt passieren kann während ein anderer spektraler Anteil des sichtbaren Lichts vollständig oder in nicht unerheblichem Maße absorbiert oder reflektiert wird.

Fällt ein Beleuchtungslichtstrahl auf derartige Messobjekte wird dieser direkt reflektiert, d.h. der Einfallswinkel des Beleuchtungslichtstahls auf der Oberfläche des Messobjekts ist gleich dem Ausfallwinkel des reflektierten Beleuchtungslichtstrahls. Streuungen in andere Raumrichtungen sind praktisch nicht vorhanden. Dies führt dazu, dass Sensoreinrichtung und Messobjekt optimal zueinander ausgerichtet sein müssen, damit eine Messung zu verwertbaren Ergebnissen führt. Ist die Oberfläche des Messobjekts nur geringfügig aus der optimalen Lage verkippt, wird der Beleuchtungslichtstrahl nicht zum Detektor reflektiert. Das Messverfahren scheitert und ist erheblich instabil. Eine optimale Ausrichtung der Sensoreinrichtung und des Messobjekts zueinander ist insbesondere bei der Qualitätssicherung in Fertigungsumgebungen praktisch nicht zu gewährleisten. Bei gewölbten oder gerundeten Messobjekten ist diese Ausrichtung praktisch unmöglich. Ähnlich problematisch ist das optische Messen an nicht-transparenten Messobjekten, die aufgrund ihrer Oberflächenbeschaffenheit Licht direkt reflektieren. Die Probleme sind hier vergleichbar. Beispielhaft sei auf spiegelnde Oberflächen verwiesen.

Die EP 2 189 752 A1 offenbart Maßnahmen zur Erhöhung des Kontrastes beim Erfassen der Oberflächenbeschaffenheit eines Messobjekts. Das Messobjekt wird mit elektromagnetischer Strahlung beleuchtet, beispielsweise Funkwellen, infrarotes und sichtbares Licht, UV-Licht und Röntgenstrahlen, wobei vorzugsweise sichtbares Licht und UV-Strahlung Verwendung finden sollen. Die Oberfläche des Messobjekts ist mit einer dünnen Schicht von Partikeln überzogen, wodurch die elektromagnetische Strahlung auf der Oberfläche des Messobjekts diffus reflektiert wird. Dies erhöht den Anteil der zum System zurückgestreuten elektromagnetischen Strahlung.

Die WO 02/066924 A1 zeigt ein Verfahren und eine Vorrichtung zum optischen Erfassen eines Scheinwerfers eines Kraftfahrzeugs. Dazu wird der Scheinwerfer durch einen Laser 18 beleuchtet. Das von der Oberfläche zurückgestreute Laserlicht wird durch eine Kamera 19 erfasst. Die Oberfläche des Scheinwerfers wird mit einem Niederschlag benetzt, wodurch der Laser diffus reflektiert wird. Dies erhöht den Anteil der zur Vorrichtung zurückgestreuten Laserstrahlung.

Ein ähnliches Verfahren ist in der DE 10 2004 025 490 A1 offenbart, die ein Verfahren zum optischen Vermessen von reflektierenden und/oder transparenten Objekten mittels Lasermesstechnik betrifft. Auch hier wird das Messobjekt mit einem Flüssigkeitsfilm, insbesondere ein Kondensatfilm, überzogen.

Die DE 103 36 666 A1 beschreibt ein Messverfahren zur Erfassung geometrischer Oberflächenmerkmale eines Bauteils, insbesondere zum Vermessen von Spaltmaßen bei der Fahrzeugherstellung. Hierbei wird ausgenutzt, dass sich einige Materialien im sichtbaren Wellenlängenbereich und im UV-Bereich unterschiedlich verhalten. Zur Bestimmung der Spaltmaße wird die Messanordnung in solcher Weise gegenüber dem zu vermessenden Bauteil positioniert, dass nach dem Gesetz Einfallswinkel gleich Ausfallswinkel am Ort der höchsten lokalen Krümmung (der Spaltberandung) eine Totalreflektion mit einem Detektionsmittel beobachtbar ist. Aus den Positionen und relativen Abständen der Beleuchtungslinien auf dem Detektionsmittel wird auf das Spaltmaß geschlossen.

Der vorliegenden Erfindung liegt die Aufgabe zugrunde, Messsysteme der eingangs genannten Art zur Messung an transparenten, teiltransparenten oder nichttransparenten Messobjekten derart auszugestalten und weiterzubilden, dass eine zuverlässige optische Abstandsmessung auch an Messobjekten durchgeführt werden kann, an deren Oberfläche eine direkte Reflektion auftritt.

Erfindungsgemäß wird die voranstehende Aufgabe für die Messung an transparenten und teil-transparenten Messobjekten durch die Merkmale des Anspruchs 1 gelöst. Danach ist das in Rede stehende Messsystem dadurch gekennzeichnet, dass der Beleuchtungslichtstrahl eine Wellenlänge im violetten oder ultravioletten Bereich aufweist und dass das Messobjekt derart ausgebildet ist, dass der Beleuchtungslichtstrahl an der Oberfläche des Messobjekts diffus reflektiert wird, ohne dass die optischen Eigenschaften des Messobjekts im sichtbaren Bereich beeinflusst werden.

Bei der Messung gegen nicht-transparente Messobjekte wird die voranstehende Aufgabe durch die Merkmale des Anspruchs 5 gelöst. Danach ist das in Rede stehende Messsystem dadurch gekennzeichnet, dass der Beleuchtungslichtstrahl eine Wellenlänge im violetten oder ultravioletten Bereich aufweist und dass auf einer Oberfläche des Messobjekts eine Beschichtung aufgebracht ist, durch die der Beleuchtungslichtstrahl diffus reflektiert wird, ohne dass die optischen Eigenschaften im sichtbaren Bereich beeinflusst werden.

In erfindungsgemäßer Weise ist zunächst erkannt worden, dass transparente oder teiltransparente Messobjekte sehr häufig die Eigenschaft aufweisen, dass sie im violetten oder ultravioletten Wellenlängenbereich lichtundurchlässig oder stark lichtdämpfend ausgebildet sind. Meist wird diese Eigenschaft als Schutzmaßnahme gezielt herbeigeführt. Insbesondere Kunststoffe neigen dazu, bei lang andauernder Bestrahlung mit ultraviolettem Licht ihre Transparenz zu verlieren. Zur Verhinderung dieses Effekts werden die Kunststoffe so behandelt, dass violettes und/oder ultraviolettes Licht nicht oder kaum in das Material eindringt. Vielmehr wird violettes und/oder ultraviolettes Licht an der Oberfläche des Materials diffus reflektiert. Die Lichtundurchlässigkeit oder starke Lichtdämpfung dieser Messobjekte wird bei dem erfindungsgemäßen Messsystem genutzt.

Erfindungsgemäß wird als Beleuchtungslichtstrahl ein Lichtstrahl genutzt, der eine Wellenlänge im violetten oder ultravioletten Bereich aufweist. Durch die Kombination dieses Beleuchtungslichtstrahls mit dem genannten Messobjekt wird auf verblüffend einfache Art und Weise erreicht, dass der Beleuchtungslichtstrahl nicht direkt sondern diffus reflektiert wird. Dadurch kann eine Messung an transparenten oder teiltransparenten Messobjekten mit einem optischen Messsystem erreicht werden, ohne dass die optischen Eigenschaften des Messobjekts im sichtbaren Bereich beeinflusst werden.

Diese Merkmalskombination kann erfindungsgemäß auch bei der Messung von nichttransparenten Messobjekten verwendet werden, d.h. bei Messobjekten, durch die sichtbares Licht praktisch nicht durchdringen kann und an denen sichtbares Licht direkt reflektiert wird. Erfindungsgemäß wird hierzu auf das Messobjekt eine Beschichtung aufgebracht, die für violettes und/oder ultraviolettes Licht undurchlässig ist oder die violettes und/oder ultraviolettes Licht in nicht unerheblichem Maße dämpft. Dadurch entsteht eine diffuse Reflektion des violetten oder ultravioletten Beleuchtungslichtstrahls an der Oberfläche des Messobjekts.

Durch die diffuse Reflektion des Beleuchtungslichtstrahls an einer Oberfläche des Messobjekts - transparent, teiltransparent oder nichttransparent - wird erreicht, dass der Beleuchtungslichtstrahl nicht mehr nur in eine Raumrichtung sondern in einen Winkelbereich um den Lichtstrahl der direkten Reflektion herum reflektiert wird. Dadurch muss das Messobjekt und die Sensoreinrichtung nicht mehr präzise zueinander ausgerichtet werden und der Einsatzbereich dieses Messsystems wird deutlich erweitert. Es können deutlich stabilere Messsituationen erreicht werden.

Die Oberfläche des Messobjekts, an der der Beleuchtungslichtstrahl reflektiert wird ist vorzugsweise die der Sensoreinrichtung zugewandte Außenfläche des Messobjekts. Prinzipiell ist auch denkbar, dass der Beleuchtungslichtstrahl bei transparenten Messobjekten zunächst in das Messobjekt eindringt und dann auf der der Sensoreinrichtung abgewandten Oberfläche oder einer beliebigen im Messobjekt angeordneten Trennfläche in Richtung Detektor reflektiert wird. Bevorzugter Weise kommen jedoch Messobjekte zum Einsatz, bei denen der Beleuchtungslichtstrahl nicht oder nur unerheblich in das Messobjekt eindringt.

Bei einem transparenten oder teiltransparenten Messobjekt kann die diffuse Reflektion des Beleuchtungslichtstrahls durch eine besondere Beschichtung des Messobjekts hervorgerufen sein. Hierfür geeignete Beschichtungen, die im violetten und/oder ultravioletten Bereich undurchlässig oder stark dämpfend sind, sind aus der Praxis bekannt. Beispielhaft jedoch nicht auf diese beschränkend sei auf beschichtetes Kunststoff-Glas hingewiesen.

Allerdings ist auch denkbar, dass das Messobjekt durch seine Materialzusammensetzung bereits die geforderte Eigenschaft besitzt und violettes und/oder ultraviolettes Licht nicht nennenswert in das Messobjekt eindringen kann. Entsprechende für sichtbares Licht transparente und im violetten und/oder ultravioletten Bereich undurchlässige Materialien sind aus der Praxis bekannt.

Bei einem bevorzugten Anwendungsbeispiel des erfindungsgemäßen Messsystems besteht das Messobjekt aus transparenten Kunststoffteilen oder beschichteten Gläsern aus dem Fahrzeugbereich. In besonders bevorzugter Weise wird das Messsystem für die Vermessung von Linsen oder Scheiben eines Fahrzeugscheinwerfers oder einer Rückleuchte eingesetzt.

Bevorzugte Anwendungsbeispiele mit nichttransparenten Messobjekten beziehen sich auf das Vermessen von lichtundurchlässigen Kunststoffen, polierten Metallplatten oder anderweitig ausgestaltete Objekte aus Metall. Aber auch Holz, holzartige Werkstoffe oder Papier können nichttransparente Objekte bilden. Das Messobjekt muss nicht vollständig lichtundurchlässig sein. Das Messobjekt kann prinzipiell auch transluzent sein.

Bevorzugter Weise sind die Messobjekte - transparente, teiltransparente oder nichttransparente - derart ausgebildet, dass sie für Licht mit einer Wellenlänge von weniger als 420 nm lichtundurchlässig oder stark dämpfend sind. Besonders bevorzugter Weise sind sie für Licht mit einer Wellenlänge kleiner gleich 390 nm undurchlässig oder stark dämpfend.

Für ein besonders gutes optisches Verhalten der Sensoreinrichtung kann die Lichtquelle durch einen Laser gebildet sein, der einen Laserstrahl als Beleuchtungslichtstrahl aussendet. Hierbei lassen sich Laserdioden ebenso wie Festkörper- oder Gas-Laser einsetzen. Für besonders kostengünstige Messsysteme kann die Lichtquelle aber auch durch eine Leuchtdiode gebildet sein. In vielen Anwendungsbereichen ist die reduzierte Lichtqualität ausreichend.

Der Beleuchtungslichtstrahl weist vorzugsweise eine Wellenlänge kleiner oder gleich 425 nm auf. Besonders bevorzugter Weise kommt ein Beleuchtungslichtstrahl mit einer Wellenlänge kleiner oder gleich 405 nm zum Einsatz. Ganz besonders bevorzugter Weise ist die Wellenlänge des Beleuchtungslichtstrahl kleiner oder gleich 390 nm. Generell ließen sich Lichtquellen bis hin zu extrem kurzwelligem UV-Licht einsetzen. Allerdings werden derartige Lichtquellen sehr teuer und ein sicherer Betrieb des Messsystems wird wegen besonderer Schutzmaßnahmen aufwändig. Daher sind der Wellenlänge Grenzen gesetzt. Derzeit technisch sinnvoll umsetzbare, minimale Wellenlängen liegen bei 300 nm.

Der Beleuchtungslichtstrahl beleuchtet das Messobjekt vorzugsweise punktförmig oder linienförmig. Die Punkte oder Linien können auch zu Mustern wie gekreuzte Linien oder mehrere parallele Linien zusammengefügt sein. Vorzugsweise sind die Linien der Beleuchtung gerade.

Vorzugsweise ist im Strahlengang des Beleuchtungslichtstrahls nach der Lichtquelle eine Fokussiereinrichtung angeordnet, mit der der Beleuchtungslichtstrahl fokussiert wird. Lichtquelle und Fokussiereinrichtung bilden gemeinsam eine Beleuchtungseinheit. Vorzugsweise ist der Beleuchtungslichtstrahl auf die Oberfläche des Messobjekts fokussiert. Allerdings wäre auch denkbar, den Beleuchtungslichtstrahl ins Unendliche oder auf andere Punkte auf der optischen Achse zu fokussieren.

Als Detektor kann ein CMOS (Complimentary Metal Oxide Silicon) Array oder ein CCD (Charge Coupled Device) Array verwendet werden. Das Array ist vorzugsweise ein Linienarray oder ein Flächenarray (d.h. mit zweidimensionaler Ausdehnung). Linienarrays können beispielsweise bei punktförmigen Abstandsmessungen, Flächenarrays bei Abstandsmessung nach dem Linienschnittverfahren verwendet werden. In einigen Fällen kann auch eine konventionelle Zeilen- oder Matrixkamera den Detektor bilden.

Für punktförmige Abstandsmessungen kann auch eine PSD (Position Sensitive Diode) oder eine APD (Avalanche PhotoDiode) eingesetzt werden. Insbesondere APDs lassen sich gut für Abstandsmessungen durch Laufzeit- oder Phasenverschiebungsmessung einsetzen. PSDs oder APDs können in einem Array angeordnet sein.

Zum Ausblenden von Fremdstrahlung kann im Detektionskanal, d.h. dem Strahlengang des an einer Oberfläche des Messobjekts reflektierten Anteils des Beleuchtungslichtstrahls innerhalb der Sensoreinrichtung, vor dem Detektor ein wellenlängenselektives Element angeordnet sein. Durch das wellenlängenselektive Element kann beispielsweise Umgebungslicht von dem breitbandig empfindlichen Detektor ferngehalten werden. Das wellenlängenselektive Element kann durch ein Filter (beispielsweise ein Interferenzfilter) oder ein dispersives Element gebildet sein. Das wellenlängenselektive Element kann aber auch - beispielsweise zur Reduzierung der Baugröße der Sensoreinrichtung - durch einen dichroitischen Spiegel zur Strahlumlenkung/-faltung gebildet sein. Generell ist es sinnvoll, den gesamten optischen Kanal, d.h. den Weg den der Beleuchtungslichtstrahl von der Lichtquelle bis zum Detektor nimmt, auf die Wellenlänge des Beleuchtungslichts anzupassen.

Um die Welllängenselektion noch weiter zu verbessern, ist auch eine Kombination von mehreren wellenlängenselektiven Elementen denkbar. So können beispielsweise mehrere dispersive Elemente nacheinander angeordnet sein. Vorzugsweise werden jedoch andersartige wellenlängenselektive Elemente miteinander kombiniert. So ist die Kombination eines Filters oder eines dispersiven Elements mit einem dichroitischen Spiegel möglich.

Vorzugsweise umfasst das Messsystem eine Auswerteeinheit, die mit der Sensoreinrichtung verbunden ist und Messsignale der Sensoreinrichtung erhält. Gegebenenfalls erhält die Auswerteeinrichtung zusätzlich Informationen über den Beleuchtungslichtstrahl, wenn beispielsweise der Beleuchtungslichtstrahl moduliert ist. Basierend auf dem Empfangslichtstrahl (d.h. den am Messobjekt reflektierten und bei dem Detektor empfangenen Anteil des Beleuchtungslichtstrahls) und eventuell basierend auf Kenntnisse über den Beleuchtungslichtstrahl selbst führt die Auswerteeinrichtung eine Bestimmung eines Abstands zwischen der Sensoreinrichtung und dem Messobjekt durch. Die Bestimmung des Abstands kann beispielweise durch Berechnen oder durch Auslesen von Werten aus einer Tabelle, deren Inhalt in Kalibrierungsmessungen ermittelt worden ist und bei der Auswerteeinheit hinterlegt ist, erfolgen.

Zusätzlich oder alternativ zu den Informationen über den Beleuchtungslichtstrahl kann die Auswerteeinheit Informationen über die Intensität des vom Messobjekt reflektierten Lichts erhalten und mittels einer Steuereinheit entsprechend die Intensität der Lichtquelle nachregeln und/oder die Integrationszeit des Detektors anpassen und/oder einen im Detektorzeig angeordneten Signalverstärker anpassen.

Sensoreinrichtung und Auswerteeinheit können derart ausgebildet sein, dass eine Abstandsmessung nach dem Triangulationsverfahren durchgeführt wird. Hierzu sind Lichtquelle und Detektor derart angeordnet, dass die Lichtquelle, der beleuchtete Punkt auf der Oberfläche des Messobjekts und der beleuchtete Punkt auf dem Detektor ein Dreieck bilden. Mit Kenntnis der Geometrie der Sensoreinrichtung kann der Abstand des beleuchteten Punktes auf der Oberfläche des Messobjekts von der Sensoreinrichtung berechnet werden.

Sensoreinrichtung und Auswerteeinheit können auch derart ausgebildet sein, dass eine Abstandsmessung über eine Messung der Lichtlaufzeit bestimmbar ist. Hierzu wird gemessen, wie lange ein Lichtstrahl von der Lichtquelle zum Messobjekt und zum Detektor benötigt. Mit Kenntnis der Lichtgeschwindigkeit kann daraus der Abstand bestimmt werden.

Eine weitere mögliche Ausgestaltung der Sensoreinrichtung und der Auswerteeinheit besteht darin, dass eine Phasenverschiebung gemessen wird. Hierzu wird der Beleuchtungslichtstrahl mit einer geeigneten Frequenz in seiner Helligkeit moduliert und die Helligkeitsveränderungen des Beleuchtungslichtstrahls und des Empfangslichtstrahls miteinander verglichen. Aus der gegenseitigen Phasenlage kann auf die Lichtlaufzeit und damit auf den Abstand zwischen Sensoreinrichtung und Messobjekt geschlossen werden.

Die Auswerteeinheit kann mehrere Abstandsmesswerte derart kombinieren, dass ein Profil des Messobjekts bzw. eines Teils des Messobjekts entsteht. Hierzu werden Abstandswerte mit der Position der Messpunkte auf dem Messobjekt in Verbindung gebracht. Arbeitet die Sensoreinrichtung beispielsweise nach dem Linienschnittverfahren, kann ein Profil längs einer Linie mit einer Messung bestimmt werden. Überstreicht die Linie das Messobjekt, kann die dreidimensionale Struktur des Messobjekts oder eines Teils der Messobjekts bestimmt werden. Für eine Profilmessung können auch Sensoreinrichtung und Messobjekt relativ zueinander bewegbar ausgestaltet sein. Es ist aber auch möglich, dass eine der Beleuchtungslichtstrahl mit einer Umlenkvorrichtung über das Messobjekt bewegt wird. Entsprechende Scanvorrichtungen sind aus der Praxis bekannt.

Nach einem besonders bevorzugten Ausführungsbeispiel betrifft die Erfindung ein Messsystem nach dem Triangulationsprinzip, das zum Messen von Abständen gegen Objekte eingesetzt wird, welche aufgrund einer Beschichtung oder ihrer Materialzusammensetzung UV-Licht teils absorbieren und teils reflektieren. Eine Beleuchtungseinheit (z.B. Laserdiode mit Fokussieroptik) sendet fokussiertes Licht mit einer Emmissionswellenlänge im UV-Bereich aus. Es erfolgt eine Selektion dieser Wellenlänge von anderen Wellenlängen im Empfangsstrahlengang durch optische Filter, dispersive Elemente und/oder dichroitische Spiegel mit entsprechenden Blenden. Teile des ausgesendeten Lichtes werden von der Oberfläche des Objektes bzw. aus dem Objekt heraus diffus in den Empfangsstrahlengang reflektiert.

Es gibt nun verschiedene Möglichkeiten, die Lehre der vorliegenden Erfindung in vorteilhafter Weise auszugestalten und weiterzubilden. Dazu ist einerseits auf die dem Anspruch 1 und 5 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: eine Intensitätsverteilung längs eines Detektors bei Verwendung eines roten Beleuchtungslichtstrahls mit einer Wellenlänge von 670 nm und
- Fig. 2: eine Intensitätsverteilung längs eines Detektors bei Verwendung eines violetten Beleuchtungslichtstrahls mit einer Wellenlänge von 405 nm in einem erfindungsgemäßen Messsystem.

Die in den beiden Figuren dargestellten Diagramme sind an der gleichen Messanordnung ermittelt worden. Ein Laser erzeugt zusammen mit einer Linse einen fokussierten Laserstrahl, der auf ein Fahrzeugscheinwerferglas - Messobjekt - aus ca. 2 mm dickem Kunststoff-Glas gelenkt wird. Der Laserstrahl wird an einer Oberfläche des Messobjekts zumindest teilweise reflektiert und gelangt durch eine weitere Linse, ein wellenlängenselektives Filter, das auf die Wellenlänge des Beleuchtungslichtstrahls angepasst ist, und eine Blende zu einem Zeilendetektor. Die Sensoreinrichtung führt eine Messung nach dem Triangulationsverfahren durch. Das Messobjekt ist an der Oberfläche, die der Sensoreinrichtung zugewandt ist, mit einer für ultraviolettes Licht undurchlässigen Beschichtung versehen.

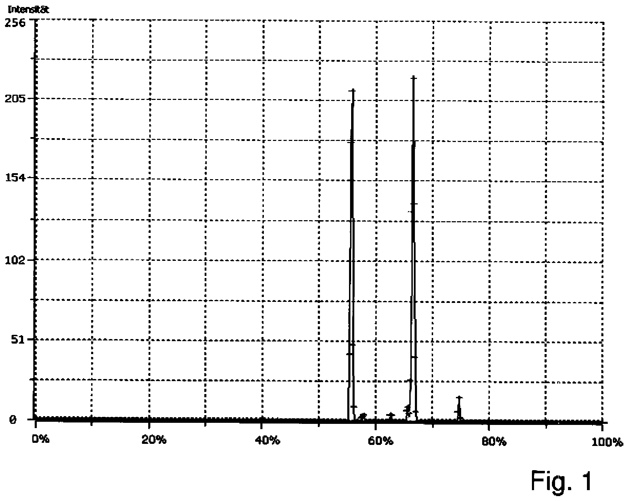

Fig. 1 zeigt eine Intensitätsverteilung bei Verwendung eines roten Lasers mit einer Emissionswellenlänge von 670 nm nach dem Stand der Technik. Zum einen ist eine optimale Ausrichtung des Messobjekts und der Sensoreinrichtung relativ zueinander notwendig. Zum anderen sind in der Intensitätsverteilung zwei ausgeprägte Hauptpeaks vorhanden. Der linke Peak in Fig. 1 rührt von der Reflektion des Beleuchtungslichtstrahls an der Oberfläche des Messobjekts her, die der Sensoreinrichtung zugewandt ist. Bei dem rechten Peak dringt der Beleuchtungslichtstrahl in das Messobjekt ein und wird an der Oberfläche des Messobjekts reflektiert, die der Sensoreinrichtung abgewandt ist. Dadurch wird die Messung nicht mehr eindeutig. Ein anderes Problem besteht darin, dass der rechte Peak höher ist als der linke Peak. Wird vereinfachender Weise eine Auswertung des Intensitätsverlaufs basierend auf den höchsten Peak durchgeführt, ergeben sich fehlerhafte Abstandswerte. Wird die Intensität des Beleuchtungslichtstrahls und Belichtungszeit basierend auf den höchsten Peak geregelt, können sich sogar instabile Messungen ergeben. Ebenfalls kann es vorkommen, dass aufgrund von Objektverkippungen die Intensität des ersten Peaks so gering ist, dass er von der Sensoreinrichtung nicht mehr ausgewertet wird und damit eine fehlerhafte Messung gegen die Rückseite des Messobjekts oder gegen interne Reflektionspunkte erfolgt. Die kleineren Peaks, die in der Intensitätsverteilung nach Fig. 1 zu erkennen sind, resultieren von Mehrfachreflektionen in dem Messobjekt.

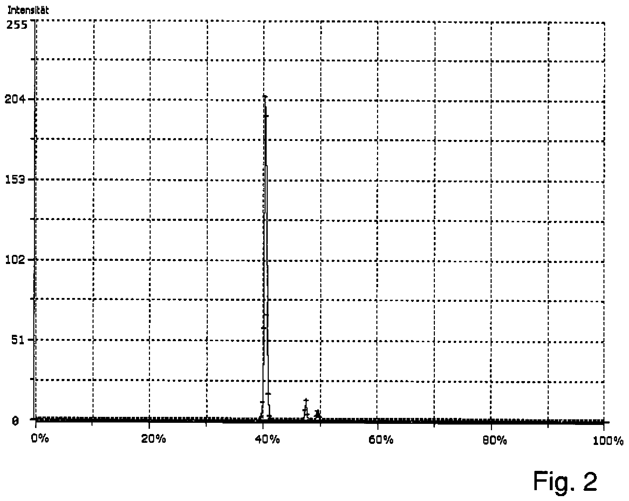

Fig. 2 zeigt die erfindungsgemäße Verwendung eines violetten Lasers mit einer Wellenlänge von 405 nm. Durch die diffuse Reflektion an der Oberfläche des Messobjekts kann die Sensoreinrichtung und das Messobjekt freier positioniert werden. Des Weiteren ist in der Intensitätsverteilung nach Fig. 2 lediglich ein einzelner Peak ausgeprägt. Ein sehr kleiner Nebenpeak deutet darauf hin, dass ein geringer Anteil des Beleuchtungslichtstrahls in das Messobjekt eindringt und an der Oberfläche des Messobjekts, die der Sensoreinrichtung abgewandt ist, reflektiert wird. Die Intensität ist aber so gering, dass der Nebenpeak nicht ins Gewicht fällt. Mehrfachreflektionen treten nicht auf.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken. Die Erfindung ist durch die Ansprüche definiert.

## Patentansprüche

1. Messsystem zum Bestimmen eines Abstandes zwischen einer Sensoreinrichtung und einem Messobjekt, wobei das Messsystem die Sensoreinrichtung und das Messobjekt umfasst, wobei die Sensoreinrichtung eine Lichtquelle zum Erzeugen eines Beleuchtungslichtstrahls und einen Detektor zum Detektieren eines an einer Oberfläche des Messobjekts reflektierten Anteils des Beleuchtungslichtstrahls umfasst und wobei das Messobjekt zumindest für einen Wellenlängenbereich des sichtbaren Lichts transparent ausgebildet ist,
**dadurch gekennzeichnet, dass** der Beleuchtungslichtstrahl eine Wellenlänge im violetten oder ultravioletten Bereich aufweist und dass das Messobjekt derart ausgebildet ist, dass der Beleuchtungslichtstrahl an der Oberfläche des Messobjekts diffus reflektiert wird, ohne dass die optischen Eigenschaften des Messobjekts im sichtbaren Bereich beeinflusst werden.

2. Messsystem nach Anspruch 1, **dadurch gekennzeichnet, dass** eine Oberfläche des Messobjekts zum Erzeugen der diffusen Reflektion des Beleuchtungslichtstrahl eine Beschichtung aufweist, die im violetten und/oder ultravioletten Wellenlängenbereich undurchlässig oder zumindest stark dämpfend ist.

3. Messsystem nach Anspruch 1 oder 2, **dadurch gekennzeichnet, dass** das Messobjekt aus einem Material ausgebildet ist, das im violetten und/oder ultravioletten Wellenlängenbereich undurchlässig oder zumindest stark dämpfend ist.

4. Messsystem nach einem der Ansprüche 1 bis 3, **dadurch gekennzeichnet, dass** das Messobjekt aus einem transparenten Kunststoff, vorzugsweise einer Linse oder einer Scheibe eines Fahrzeugscheinwerfers oder einer Fahrzeugrückleuchte, gebildet ist.

5. Messsystem zum Bestimmen eines Abstandes zwischen einer Sensoreinrichtung und einem Messobjekt, wobei das Messsystem die Sensoreinrichtung und das Messobjekt umfasst, wobei die Sensoreinrichtung eine Lichtquelle zum Erzeugen eines Beleuchtungslichtstrahls und einen Detektor zum Detektieren eines an einer Oberfläche des Messobjekts reflektierten Anteils des Beleuchtungslichtstrahls umfasst und wobei das Messobjekt derart ausgebildet ist, dass sichtbares Licht direkt reflektiert wird,
**dadurch gekennzeichnet, dass** der Beleuchtungslichtstrahl eine Wellenlänge im violetten oder ultravioletten Bereich aufweist und dass auf einer Oberfläche des Messobjekts eine Beschichtung aufgebracht ist, durch die der Beleuchtungslichtstrahl diffus reflektiert wird, ohne dass die optischen Eigenschaften des Messobjekts im sichtbaren Bereich beeinflusst werden.

6. Messsystem nach Anspruch 5, **dadurch gekennzeichnet, dass** das Messobjekt aus einem lichtundurchlässigen Kunststoff, aus Metall, Holz und/oder Papier gebildet ist.

7. Messsystem nach einem der Ansprüche 1 bis 6, **dadurch gekennzeichnet, dass** die Lichtquelle durch einen Laser gebildet ist, der einen Laserstrahl als Beleuchtungslichtstrahl aussendet,
wobei der Beleuchtungslichtstrahl eine Wellenlänge kleiner gleich 425 nm, bevorzugter Weise kleiner gleich 405 nm, besonders bevorzugter Weise kleiner gleich 390 nm aufweist.

8. Messsystem nach einem der Ansprüche 1 bis 7, **dadurch gekennzeichnet, dass** der Beleuchtungslichtstrahl das Messobjekt punktförmig, linienförmig, als gekreuzte Linien und/oder als mehrere parallele Linien beleuchtet.

9. Messsystem nach einem der Ansprüche 1 bis 8, **dadurch gekennzeichnet, dass** nach der Lichtquelle eine Fokussiereinrichtung angeordnet ist, mittels der der Beleuchtungslichtstrahl fokussiert wird.

10. Messsystem nach einem der Ansprüche 1 bis 9, **dadurch gekennzeichnet, dass** der Detektor ein CMOS- oder ein CCD-Array umfasst, wobei das Array vorzugsweise als Linienarray oder als Flächenarray ausgebildet ist, oder dass der Detektor eine positionsempfindliche Diode - PSD - und/oder eine Avalanche-Fotodiode - APD - umfasst.

11. Messsystem nach einem der Ansprüche 1 bis 10, **dadurch gekennzeichnet, dass** zum Ausblenden von Fremdstrahlung vor dem Detektor ein wellenlängenselektives Element angeordnet ist, wobei das wellenlängenselektive Element vorzugsweise durch einen Filter, ein dispersives Element oder einen dichroitischen Spiegel gebildet ist,
wobei mehrere, vorzugsweise andersartige wellenlängenselektive Elemente kombiniert sein können.

12. Messsystem nach einem der Ansprüche 1 bis 11, **dadurch gekennzeichnet, dass** eine Auswerteeinheit mit der Sensoreinrichtung verbunden ist, wobei die Auswerteeinrichtung basierend auf dem am Messobjekt reflektierten und bei dem Detektor empfangenen Anteil des Beleuchtungslichtstrahls - Empfangslichtstrahl - einen Abstandsmesswert bestimmt.

13. Messsystem nach Anspruch 12, **dadurch gekennzeichnet, dass** die Auswerteeinheit und die Sensoreinrichtung derart ausgebildet sind, dass eine Abstandsmessung nach einem Triangulationsverfahren durchgeführt wird.

14. Messsystem nach Anspruch 12, **dadurch gekennzeichnet, dass** die Auswerteeinheit und die Sensoreinrichtung derart ausgebildet sind, dass eine Messung der Laufzeit des Beleuchtungs- und Empfangslichts oder eine Messung einer Phasenverschiebung zwischen einem modulierten Beleuchtungslichtstrahl und dem Empfangslichtstrahl durchgeführt wird.

15. Messsystem nach einem der Ansprüche 12 bis 14, **dadurch gekennzeichnet, dass** Messobjekt und Sensoreinrichtung relativ zueinander verschiebbar ausgebildet sind und dass die Auswerteeinheit derart ausgebildet ist, dass aus mehreren Abstandsmessungen ein Profil des Messobjekts oder eines Teils des Messobjekts bestimmbar ist.

## Claims

1. Measurement system for determining a spacing between a sensor device and a measurement object, wherein the measurement system comprises the sensor device and the measurement object, wherein the sensor device comprises a light source for producing an illumination light beam and a detector for detecting a portion of the illumination light beam reflected on a surface of the measurement object, and wherein the measurement object is constructed to be transparent for at least one wavelength range of visible light,
**characterised in that** the illumination light beam has a wavelength in the violet or ultraviolet range and **in that** the measurement object is constructed in such a manner that the illumination light beam is reflected in a diffuse manner on the surface of the measurement object without the optical properties of the measurement object in the visible range being influenced.

2. Measurement system according to claim 1, **characterised in that** a surface of the measurement object for producing the diffuse reflection of the illumination light beam has a coating which is impermeable or at least highly damping in the violet and/or ultraviolet wavelength range.

3. Measurement system according to claim 1 or 2, **characterised in that** the measurement object is formed from a material which is impermeable or at least highly damping in the violet and/or ultraviolet wavelength range.

4. Measurement system according to any one of claims 1 to 3, **characterised in that** the measurement object is formed from a transparent plastics material, preferably a lens or a pane of a vehicle headlight or a vehicle rear light.

5. Measurement system for determining a spacing between a sensor device and a measurement object, wherein the measurement system comprises the sensor device and the measurement object, wherein the sensor device comprises a light source for producing an illumination light beam and a detector for detecting a portion of the illumination light beam reflected on a surface of the measurement object, and wherein the measurement object is constructed in such a manner that visible light is reflected directly, **characterised in that** the illumination light beam has a wavelength in the violet or ultraviolet range and **in that** there is applied to a surface of the measurement object a coating by means of which the illumination light beam is reflected in a diffuse manner without the optical properties of the measurement object in the visible range being influenced.

6. Measurement system according to claim 5, **characterised in that** the measurement object is formed from a light-impermeable plastics material, metal, wood and/or paper.

7. Measurement system according to any one of claims 1 to 6, **characterised in that** the light source is formed by a laser which transmits a laser beam as an illumination light beam, wherein the illumination light beam has a wavelength less than or equal to 425 nm, preferably less than or equal to 405 nm, in a particularly preferred manner less than or equal to 390 nm.

8. Measurement system according to any one of claims 1 to 7, **characterised in that** the illumination light beam illuminates the measurement object in a spot-like manner, linear manner, as crossed lines and/or as a plurality of parallel lines.

9. Measurement system according to any one of claims 1 to 8, **characterised in that** a focusing device by means of which the illumination light beam is focused is arranged downstream of the light source.

10. Measurement system according to any one of claims 1 to 9, **characterised in that** the detector comprises a CMOS or a CCD array, wherein the array is preferably constructed as a linear array or as a surface array, or **in that** the detector comprises a position-sensitive diode - PSD - and/or an avalanche photodiode - APD.

11. Measurement system according to any one of claims 1 to 10, **characterised in that** in order to suppress external radiation a wavelength-selective element is arranged upstream of the detector, wherein the wavelength-selective element is preferably formed by a filter, a dispersive element or a dichroitic mirror,
wherein a plurality of preferably different wavelength-selective elements can be combined.

12. Measurement system according to any one of claims 1 to 11, **characterised in that** an evaluation unit is connected to the sensor device, wherein the evaluation unit based on the proportion of the illumination light beam which is reflected on the measurement object and which is received in the detector - light beam received - determines a spacing measurement value.

13. Measurement system according to claim 12, **characterised in that** the evaluation unit and the sensor device are constructed in such a manner that a spacing measurement is carried out in accordance with a triangulation method.

14. Measurement system according to claim 12, **characterised in that** the evaluation unit and the sensor device are constructed in such a manner that a measurement of the propagation time of the illumination light and light being received or a measurement of a phase shift between a modulated illumination light beam and the light beam received is carried out.

15. Measurement system according to any one of claims 12 to 14, **characterised in that** the measurement object and sensor device are constructed to be able to be displaced relative to each other and **in that** the evaluation unit is constructed in such a manner that a profile of the measurement object or a portion of the measurement object can be determined from a plurality of spacing measurements.

## Revendications

1. Système de mesure pour la détermination d'une distance entre un dispositif de capteur et un objet de mesure, dans lequel le système de mesure comprend le dispositif de capteur et l'objet de mesure, dans lequel le dispositif de capteur comprend une source de lumière pour la production d'un rayon lumineux d'éclairage et un détecteur pour la détection d'une partie, réfléchie à la surface de l'objet de mesure, du rayon lumineux d'éclairage et dans lequel l'objet de mesure est conçu de manière transparente au moins pour un domaine de longueurs d'ondes de la lumière visible,
**caractérisé en ce que** le rayon lumineux d'éclairage comprend une longueur d'onde dans le domaine violet ou ultraviolet et **en ce que** l'objet de mesure est conçu de façon à ce que le rayon lumineux d'éclairage soit réfléchi de manière diffuse à la surface de l'objet de mesure sans que les propriétés optiques de l'objet de mesure dans le domaine visible soient influencées.

2. Système de mesure selon la revendication 1, **caractérisé en ce qu'**une surface de l'objet de mesure pour la production de la réflexion diffuse du rayon lumineux d'éclairage comprend un revêtement qui est opaque ou au moins fortement atténuant dans le domaine de longueurs d'ondes violet et/ou ultraviolet.

3. Système de mesure selon la revendication 1 ou 2, **caractérisé en ce que** l'objet de mesure est constitué d'un matériau qui est opaque ou au moins fortement atténuant dans le domaine de longueurs d'ondes violet et/ou ultraviolet.

4. Système de mesure selon l'une des revendications 1 à 3, **caractérisé en ce que** l'objet de mesure est constitué d'une matière plastique transparente, de préférence d'une lentille ou d'une vitre d'un phare de véhicule ou d'un feu arrière de véhicule.

5. Système de mesure pour la détermination d'une distance entre un dispositif de capteur et un objet de mesure, dans lequel le système de mesure comprend le dispositif de capteur et l'objet de mesure, dans lequel le dispositif de capteur comprend une source de lumière pour la production d'un rayon lumineux d'éclairage et un détecteur pour la détection d'une partie, réfléchie à la surface de l'objet de mesure, du rayon lumineux d'éclairage et dans lequel l'objet de mesure est conçu de façon à ce que la lumière visible soit réfléchie directement,
**caractérisé en ce que** le rayon lumineux d'éclairage comprend une longueur d'onde dans le domaine violet ou ultraviolet et **en ce que**, sur une surface de l'objet de mesure, est appliqué un revêtement grâce auquel le rayon lumineux d'éclairage est réfléchi de manière diffuse sans que les propriétés optiques de l'objet de mesure dans le domaine visible soient influencées.

6. Système de mesure selon la revendication 5, **caractérisé en ce que** l'objet de mesure est constitué d'une matière plastique transparente, de métal, de bois et/ou de papier.

7. Système de mesure selon l'une des revendications 1 à 6, **caractérisé en ce que** la source de lumière est constituée d'un laser qui émet un rayon laser en tant que rayon lumineux d'éclairage,
dans lequel le rayon lumineux d'éclairage présente une longueur d'onde inférieure ou égale à 425 nm, de préférence inférieure ou égale à 405 nm, plus particulièrement de préférence inférieure ou égale à 390 nm.

8. Système de mesure selon l'une des revendications 1 à 7, **caractérisé en ce que** le rayon lumineux d'éclairage éclaire l'objet de mesure de manière ponctuelle, linéaire, sous la forme de lignes croisées et/ou sous la forme de plusieurs lignes parallèles.

9. Système de mesure selon l'une des revendications 1 à 8, **caractérisé en ce que**, après la source de lumière, est disposé un dispositif de focalisation grâce auquel le rayon lumineux d'éclairage est focalisé.

10. Système de mesure selon l'une des revendications 1 à 9, **caractérisé en ce que** le détecteur est une matrice CMOS ou CCD, dans lequel la matrice est conçue de préférence comme une matrice linéaire ou une matrice plane ou **en ce que** le détecteur comprend une diode sensible à la position, PSD, et/ou une photodiode à avalanche.

11. Système de mesure selon l'une des revendications 1 à 10, **caractérisé en ce que**, pour le masquage d'un rayonnement extérieur, devant le détecteur, est disposé un élément sélectionnant les longueurs d'ondes, dans lequel l'élément sélectionnant les longueurs d'ondes est constitué de préférence d'un filtre, d'un élément dispersif ou d'un miroir dichroïque,
dans lequel, de préférence, plusieurs éléments sélectionnant les longueurs d'ondes de différents types peuvent être combinés.

12. Système de mesure selon l'une des revendications 1 à 11, **caractérisé en ce qu'**une unité d'analyse est reliée avec le dispositif de capteur, dans lequel le dispositif d'analyse détermine, sur la base de la partie du rayon lumineux d'éclairage réfléchie sur l'objet de mesure et reçue au niveau du détecteur - rayon lumineux reçu -, une valeur de mesure de distance.

13. Système de mesure selon la revendication 12, **caractérisé en ce que** l'unité d'analyse et le dispositif de capteur sont conçus de façon à ce qu'une mesure de distance soit effectuée selon un procédé de triangulation.

14. Système de mesure selon la revendication 12, **caractérisé en ce que** l'unité d'analyse et le dispositif de capteur sont conçus de façon à ce qu'une mesure du temps de trajet de la lumière d'éclairage et de la lumière reçue ou une mesure d'un décalage de phase entre un rayon lumineux d'éclairage modulé et le rayon lumineux reçu est effectué.

15. Système de mesure selon l'une des revendications 12 à 14, **caractérisé en ce que** l'objet de mesure et le dispositif de capteur sont conçus de façon à pouvoir être déplacés l'un par rapport à l'autre et **en ce que** l'unité d'analyse est conçue de façon à pouvoir déterminer, à partir de plusieurs mesures de distance, un profil de l'objet de mesure ou d'une partie de l'objet de mesure.
